Europäisches Patentamt

European Patent Office

Office européen des brevets

(19)

(11) Veröffentlichungsnummer : **0 105 097**
**B1**

(12)
# EUROPÄISCHE PATENTSCHRIFT

(45) Veröffentlichungstag der Patentschrift :
**22.01.86**

(21) Anmeldenummer : **83106539.6**

(22) Anmeldetag : **05.07.83**

(51) Int. Cl.⁴ : **F 16 C 15/00**, **F 02 P 7/06**

(54) **Rotationskörper, insbesondere Schwungscheibe für Brennkraftmaschinen.**

(30) Priorität : **10.07.82 DE 3225865**

(43) Veröffentlichungstag der Anmeldung :
**11.04.84 Patentblatt 84/15**

(45) Bekanntmachung des Hinweises auf die Patenterteilung : **22.01.86 Patentblatt 86/04**

(84) Benannte Vertragsstaaten :
**DE FR GB IT SE**

(56) Entgegenhaltungen :
**DE-B- 2 010 999**
**DE-U- 1 894 135**
**FR-A- 1 113 410**
**US-A- 2 828 161**
**US-A- 2 840 399**

(73) Patentinhaber : **BAYERISCHE MOTOREN WERKE**
**Aktiengesellschaft**
**Postfach 40 02 40 Petuelring 130**
**D-8000 München 40 (DE)**

(72) Erfinder : **Thoma, Josef, Dipl.-Ing.(FH)**
**Am Schnepfenweg 42**
**D-8000 München 50 (DE)**

(74) Vertreter : **Schweiger, Erwin**
**c/o Bayerische Motoren Werke AG - AJ-35 Postfach**
**40 02 40 Petuelring 130**
**D-8000 München 40 (DE)**

## Beschreibung

Die Erfindung bezieht sich auf einen Rotationskörper der Bauart nach dem Oberbegriff des Anspruches 1.

Bei einem bekannten Rotationskörper dieser Bauart, einer Schwungscheibe mit aufgeschrumpftem Zahnkranz (Pkw-Baumuster BMW 732i) zum Eingriff mit dem Anlasserritzel, weist der freiliegende Teil der Außenumfangsfläche ein radiales Sackloch auf, in das ein zylindrischer Befestigungsabschnitt der Bezugsmarke eingepreßt ist. Zur Sicherung gegen Fliehkräfte dient ein das Sackloch und den Befestigungsabschnitt quer durchdringender Spannstift. Diese Ausbildung und Befestigung der Bezugsmarke ist aufwendig und kostspielig, da das Sackloch und der Befestigungsabschnitt unter Einhaltung enger Toleranzen bearbeitet und zusätzlich eine Querbohrung bearbeitet und der Spannstift eingeschlagen werden müssen.

Der Erfindung liegt die Aufgabe zugrunde, einen Rotationskörper der Bauart nach dem Oberbegriff des Anspruches 1 derart auszubilden, daß eine einfache und kostengünstige Fertigung unter Einhaltung hoher Genauigkeit bezüglich Lage und Abmessungen der Bezugsmarke gegeben ist.

Diese Aufgabe wird durch die kennzeichnenden Merkmale des Anspruches 1 gelöst. Bei der erfindungsgemäßen Lösung kann die axiale Nut am Außenumfang des Rotationskörpers durch Räumen bei einem ganzen Paket von Rotationskörpern bzw. Schwungscheiben gleichzeitig hergestellt werden. Ferner entfallen die bisher erforderliche Querbohrung sowie der Spannstift und dessen Montage. Dadurch ist der erfindungsgemäße Rotationskörper mit Bezugsmarke einfach und kostengünstig herstellbar.

Weiterbildung und Ausführungsformen der Erfindung sind in den Unteransprüchen gekennzeichnet.

In der Zeichnung ist ein Ausführungsbeispiel der Erfindung dargestellt. Es zeigt :

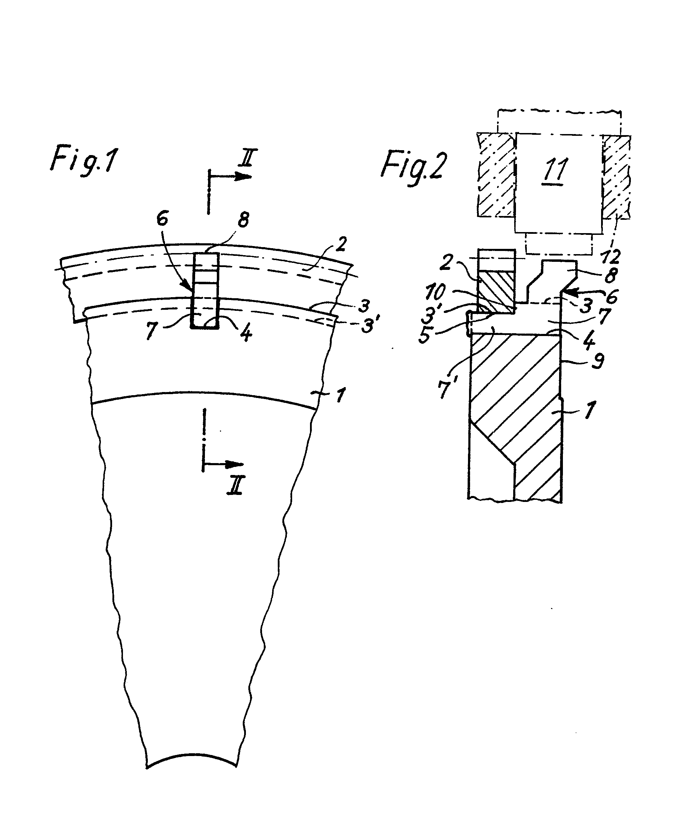

Figur 1    einen Ausschnitt einer Schwungscheibe einer Brennkraftmaschine und

Figur 2    einen Schnitt nach der Linie II-II der Fig. 1 mit einer schematischen Darstellung der Anordnung eines Sensors.

Eine Schwungscheibe 1 für Brennkraftmaschinen trägt einen aufgeschrumpften Zahnkranz 2 für den Eingriff eines nicht dargestellten Anlasserritzels. Der Zahnkranz 2 ist schmaler als die Schwungscheibe 1, so daß ein Teil ihrer Außenumfangsfläche 3 freiliegt. Am Außenumfang der Schwungscheibe ist eine axiale Nut 4 angeordnet, die teilweise durch den Zahnkranz 2 überdeckt ist, so daß in diesem Bereich eine Durchgangsöffnung 5 gebildet ist.

Eine Bezugsmarke 6 aus Sintermetall ist mit ihrem Befestigungsabschnitt 7 in der Nut 4 bzw. der Durchgangsöffnung 5 angeordnet und durch stirnseitiges Widerstandspreßschweißen befestigt. Ein Markierungsabschnitt 8 der Bezugsmarke 6 erstreckt sich im Bereich des freiliegenden Teiles der Außenumfangsfläche 3 der Schwungscheibe 1 vom Befestigungsabschnitt 7 aus im wesentlichen radial nach außen.

Lediglich der äußerste Teil des Markierungsabschnittes 8, der vollständig außerhalb der Außenumfangsfläche 3 liegt, ragt auch axial über die Stirnfläche 9 der Schwungscheibe 1 hinaus. Der Befestigungsabschnitt 7 der Bezugsmarke 6 ist rechtwinklig zu ihrem Markierungsabschnitt 8 angeordnet und ist mit der Stirnfläche 9 der Schwungscheibe 1 etwa bündig, so daß an der Stirnfläche 9 nicht dargestellte Kupplungsteile unbehindert befestigt werden können.

Der Zahnkranz 2 ist auf einen abgesetzten Teil 3' der Außenumfangsfläche 3 aufgeschrumpft. Der unter dem Zahnkranz 2 angeordnete Teil 7' des Befestigungsabschnittes 7 ist gleichfalls entsprechend abgesetzt, so daß die Bezugsmarke 6 auf der dem Grund der Nut 4 abgewandten Seite mit einer Schulter 10 am Zahnkranz 2 anliegt.

Der Bezugsmarke 6 radial gegenüberliegend ist ein Sensor 11 angeordnet, der bei jedem Durchgang der Bezugsmarke 6 ein Signal erzeugt. Der Sensor 11 ist in das nicht weiter dargestellte Maschinengehäuse 12 eingesteckt.

Diese Ausbildung und Befestigung der Bezugsmarke ergibt wesentliche Vorteile gegenüber dem bekannten Stand der Technik. Die Nuten 4 mehrerer Schwungscheiben 1 können kostengünstig hergestellt werden, indem die Schwungscheiben 1 — vor dem Aufschrumpfen der Zahnkränze 2 — zu einem Paket zusammengefaßt und die Nuten 4 mittels eines Räumwerkzeuges ausgearbeitet werden. Die Bezugsmarke 6 ist aus Sintermetall herstellbar und benötigt wegen der damit erreichbaren Genauigkeit keine Nacharbeit. Die Bezugsmarke 6 wird nach dem Aufschrumpfen des Zahnkranzes 2 lediglich in die Nut 4 bzw. die Durchgangsöffnung 5 eingeschoben, bis sie mit ihrer Schulter 10 am Zahnkranz 2 anliegt und anschließend durch Widerstandspreßschweißen befestigt. Hierbei können enge Toleranzen hinsichtlich Winkellage an der Schwungscheibe 1 und Abstand zum Sensor 11 auf einfache und kostengünstige Weise eingehalten werden.

## Patentansprüche

1. Rotationskörper, insbesondere Schwungscheibe (1) für Brennkraftmaschinen,

mit einem Ring, insbesondere Zahnkranz (2), der auf einer Außenumfangsfläche (3) des Rotationskörpers (Schwungscheibe 1) befestigt ist, und

mit einer Bezugsmarke (6), deren Markierungsabschnitt (8) im Bereich neben dem Ring (Zahnkranz 2) angeordnet ist, dadurch gekennzeichnet,

daß die Außenumfangsfläche (3) des Rotationskörpers (Schwungscheibe 1) eine axiale Nut (4) aufweist und

daß ein Befestigungsabschnitt (7) der Bezugsmarke (6) in der Nut (4) radial innerhalb des Ringes (Zahnkranz 2) lagebestimmt angeordnet und befestigt ist.

2. Rotationskörper nach Anspruch 1, dadurch gekenzeichnet, daß der Markierungsabschnitt (8) radial außerhalb eines freiliegenden Teiles der Außenumfangsfläche (3) und der Befestigungsabschnitt (7) der Bezugsmarke (6) im wesentlichen axial innerhalb einer oder beider Stirnflächen (9) des Rotationskörpers (Schwungscheibe 1) angeordnet ist.

3. Rotationskörper nach Anspruch 1 oder 2, dadurch gekennzeichnet, daß der Befestigungsabschnitt (7) der Bezugsmarke (6) an seiner vom Grund der Nut (4) abgewandten Seite eine radiale Schulter (10) aufweist, die am Ring (Zahnkranz 2) anliegt.

4. Rotationskörper nach Anspruch 3, dadurch gekennzeichnet, daß die Bezugsmarke (6) durch Widerstandspreßschweißen an derjenigen Stirnseite des Befestigungsabschnittes (8) befestigt ist, die am Ring (Zahnkranz 2) der Schulter (10) axial gegenüberliegt.

5. Rotationskörper nach einem der Ansprüche 1 bis 4, dadurch gekennzeichnet, daß die Bezugsmarke (6) durch axiales Stauchen und/oder Vernieten des Befestigungsabschnittes (8) in der Nut (4) befestigt ist.

## Claims

1. A rotatable body, especially a fly-wheel (1) for internal combustion engines,
having a ring, especially a toothed rim (2), which is secured on an external circumferential surface (3) of the body of rotation (fly-wheel 1), and
has a reference mark (6), the marking section (8) of which is arranged in the region beside the ring (toothed rim 2),
characterised in that
the external circumferential surface (3) of the rotatable body (fly-wheel 1) is provided with an axial groove (4) and
that a securing section (7) of the reference mark (6) is arranged and secured in a specific position in the groove (4) radially within the ring (toothed rim 2).

2. A rotatable body according to Claim 1, characterised in that the marking section (8) is arranged radially outside an exposed part of the external circumferential surface (3) and the securing section (7) of the reference mark (6) is arranged substantially axially within one or both end faces (9) of the rotatable body (fly-wheel 1).

3. A rotatable body according to Claim 1 or 2, characterised in that the securing section (7) of the reference mark (6) has, on its side remote from the bottom of the groove (4), a radial shoulder (10) which rests against the ring (toothed rim 2).

4. A rotatable body according to Claim 3, characterised in that the reference mark (6) is secured by resistance pressure welding on that end side of the securing section (8) which lies axially opposite to the shoulder (10) against the ring (toothed rim 2).

5. A rotatable body according to one of Claims 1 to 4, characterised in that the reference mark (6) is secured in the groove (4) by axial upsetting and/or rivetting of the securing section (8).

## Revendications

1. Corps de révolution, notamment volant (1) pour moteurs à combustion interne,
avec un anneau, notamment une couronne dentée (2), qui est fixée sur la surface périphérique (3) du corps de révolution (volant 1)
avec un repère de référence (6), dont la partie de repérage (8) est disposée dans la zone voisine de l'anneau (couronne dentée 2),
corps de révolution caractérisé en ce que :
la surface périphérique (3) du corps de révolution (volant 1) comporte une gorge axiale (4)
une partie de fixation (7) du repère de référence (6) est disposée et fixée dans une position déterminée à l'intérieur de la gorge (4) et radialement à l'intérieur de l'anneau (couronne dentée 2).

2. Corps de révolution selon la revendication 1, caractérisé en ce que la partie de repérage (8) du repère de référence (6) est disposée radialement à l'extérieur d'une partie libre de la surface périphérique (3) du corps de révolution, tandis que la partie de fixation (7) du repère de référence (6) est disposée en pratique axialement à l'intérieur de l'une ou des deux faces frontales (9) du corps de révolution (volant 1).

3. Corps de révolution selon la revendication 1 ou 2, caractérisé en ce que la partie de fixation (7) du repère de référence (6) comporte sur son côté opposé au fond de la gorge (4), un épaulement radial (10) qui s'applique contre l'anneau (couronne dentée 2).

4. Corps de révolution selon la revendication 3, caractérisé en ce que le repère de référence (6) est fixé par soudure sous pression par résistance sur celle des faces frontales de la partie de fixation (8) qui est placée axialement en face de l'épaulement (10) sur l'anneau (couronne dentée 2).

5. Corps de révolution selon une des revendications 1 à 4, caractérisé en ce que le repère de référence (6) est fixé dans la gorge (4) par refoulement axial et/ou rivetage de la partie de fixation (8).

Fig.1

Fig.2